# EUROPÄISCHE PATENTSCHRIFT

(11) **EP 1 733 289 B1**
(45) Veröffentlichungstag und Bekanntmachung des Hinweises auf die Patenterteilung: **28.05.2008**
(21) Anmeldenummer: 05729791.3
(22) Anmeldetag: 29.03.2005
(51) Int. Cl.: G05G 1/10, H01H 21/50, G05G 5/06

(54) **DREHSCHALTER**
ROTARY MONITORING SWITCH
COMMUTATEUR A SELECTEUR ROTATIF

(30) Priorität: 29.03.2004 ES 200400832
(43) Veröffentlichungstag der Anmeldung: 20.12.2006
(73) Patentinhaber: BSH Bosch und Siemens Hausgeräte GmbH, 81739 München (DE)
(72) Erfinder: ALBANDOZ RUIZ DE OCENDA, Carmelo, E-01006 Vitoria (ES)
(86) Internationale Anmeldenummer: PCT/EP2005/051418
(87) Internationale Veröffentlichungsnummer: WO 2005/093539

(56) Entgegenhaltungen:
- EP-A- 0 255 418
- EP-A- 1 111 494
- DE-A1- 3 149 944
- DE-A1- 3 520 168
- DE-A1- 19 706 677
- DE-C1- 3 727 495

## Beschreibung

Die Erfindung betrifft einen Wählschalter, der in einem Gehäuse drehbar gelagert ist und gegen den ein, eine Drehbewegung des Wählschalters hemmendes Hemmelement elastisch gedrückt ist, das in dem Gehäuse aufgenommen ist.

Temperatur-Wähler für Bügeleisen weisen in vielen Fällen einen Stift oder Vorsprünge auf, die durch Federkraft gegen eine an einem Drehschalter vorhandene raue Oberfläche derart gedrückt werden, dass sie, wenn der Drehschalter zum Einstellen der gewünschten Bügeltemperatur gedreht wird, der Drehbewegung einen gewissen Widerstand entgegensetzen und außerdem ein Geräusch erzeugen. Beides erleichtert das Einstellen der Temperatur durch den Benutzer. Die Herstellung der bekannten Temperatur-Wähler und insbesondere die Montage derartiger Federstifte ist aufwendig.

Ein bekannter Drehschalter für die Klimaregelung in Kraftfahrzeugen enthält ein Rastelement, das an einer in einem Schaltergehäuse gelagerten Drehwelle durch ein Nabenteil verbunden ist. Es weist zwei Arme auf, die jeweils mit einem Ende über einen Steg mit dem Nabenteil radial nachgiebig verbunden sind und diametral zur Drehachse liegende Rastnasen aufweisen. diese Rastnasen liegen federnd an einer Rastkulisse an (DE 198 22 083 A1). Die Herstellung derartiger Drehschalter ist ausgesprochen aufwendig.

Ein ebenfalls bekanntes Bedienelement für Steuergeräte in Kraftfahrzeugen enthält in einem Gehäuse einen Bedienknopf und eine ihm zugeordnete Rastvorrichtung, um den Bedienknopf in vorgegebener Stellung zu verrasten. Ein Rastelement rastet dabei über ein elastisches Federelement selbsttätig in eine Rastvertiefung ein. Das elastische Federelement ist aus einem federelastischen, elastomeren Material und das Rastelement aus einem Kunststoff hergestellt, und das Rastelement ist mit dem Federelement formschlüssig verbunden (DE 197 06 677 C2). Auch die Herstellung solcher Bedienelemente ist aufwendig.

Die DE 3 149 944 A1 betrifft einen elektrischen Schalter mit Rastelementen, insbesondere für Kraftfahrzeuge, bei dem wenigstens ein Rastelement federnd ausgebildet ist.

Die EP 1 111 494 A betrifft eine Haltevorrichtung für zwei bewegbar miteinander verbundene Körper. Diese Vorrichtung ist zur Verwendung in Bedieneinheiten von Kfz-Klimaanlagen vorgesehen.

Die DE 19 706 677 A1 betrifft ein Bedienelement für Steuergeräte in Kraftfahrzeugen, insbesondere Klimasteuergeräte, mit einem dem Bedienknopf zugeordneten Rastelement.

Der Erfindung liegt die Aufgabe zu Grunde, einen einfach herzustellenden und mit wenigen Arbeitsgängen zu montierenden Wählerschalter zu schaffen.

Diese Aufgabe wird erfindungsgemäß durch einen Wählschalter nach Anspruch 1 gelöst. Das gegen eine raue Oberfläche an dem Gehäuse gedrückte Hemmelement kann als länglicher Körper ausgebildet sein, der in dem Bereich zwischen seinen beiden Enden eine Querschnittsverkleinerung aufweist. Der Querschnitt kann mindestens auf etwa ein Fünftel des nicht verkleinerten Querschnitts verringert sein.

Zweckmäßige Weiterbildungen der Erfindung sind in den Unteransprüchen niedergelegt.

Die Vorteile der Erfindung liegen insbesondere darin, das sich mit diesem Temperatur-Wähler die gewünschte Temperatur präzise und feinfühlig einstellen lässt. Das Hemmelement kann allein durch seine konstruktive Gestaltung elastisch zusammendrückbar ausgebildet sein. Es können zu seiner Herstellung auch Werkstoffe verwendet werden, die selbst nicht besonders elastisch sind. Sehr einfach ist seine Herstellung dadurch, dass es in einem einzigen Spritzgießvorgang fertig gestellt werden kann. Besonders wird auch die Montage des Temperatur-Wählers vereinfacht, weil kein getrenntes Federelement eingebaut werden muss und weil das Hemmelement nicht aus verschiedenen Teilen zusammen gesetzt werden muss.

Ausführungsbeispiele der Erfindung werden im folgenden anhand der Zeichnung erläutert. Es zeigen:

Figur 1 einen erfindungsgemäßen Temperatur-Wähler, und

Figur 2 ein in dem Temperatur-Wähler nach Figur 1 verwendetes Hemmelement.

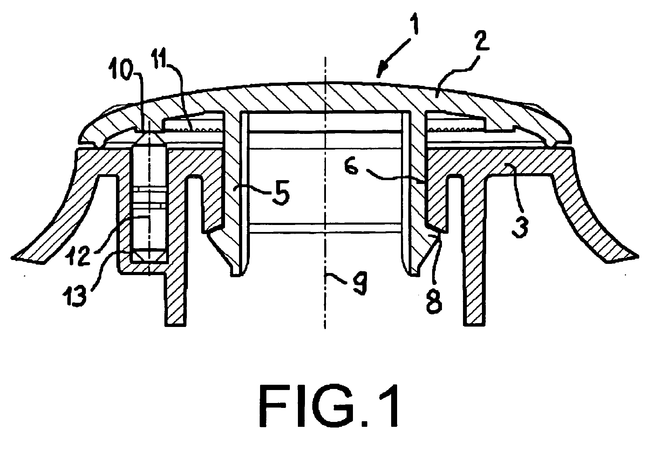

Ein Temperatur-Wähler 1 (Figur 1) ist mit einen Drehschalter 2 versehen, der in einem Gehäuse 3 drehbar gelagert ist. Der Drehschalter 2 weist ein rohrförmiges Nabenteil 5 auf, das in eine entsprechenden Bohrung 6 des Gehäuses eingeschoben ist. Ein beim Einschieben des Nabenteils 5 in die Bohrung 6 zusammendrückbarer Rand 8 hält, nachdem er hinter dem Rand der Bohrung 6 eingerastet ist, den Drehschalter 2 sicher in dem Gehäuse 3. Der Drehschalter kann frei um eine Achse 9 gedreht werden, wobei die Drehung bei Bedarf durch in der Zeichnung nicht dargestellte Anschläge auf einen vorgegebenen Winkelbereich begrenzt werden kann.

Der Drehschalter 2 weist einen senkrecht zu der Achse 9 verlaufenden und ringförmigen Rand 10 auf, der mit einer in der Zeichnung nach unten zeigenden rauen, zum Beispiel geriffelten, Oberfläche 11 versehen ist. Gegen diese Oberfläche drückt federnd ein Hemmelement 12, das damit die Drehbewegung des Drehschalters 2 mit mäßiger Kraft hemmt oder bremst. Das Hemmelement 12 ist in einer Bohrung 13 in dem Gehäuse 3 aufgenommen, die parallel zu der Achse 9 angeordnet ist.

Das Hemmelement 12 ist in dem vorliegenden Ausführungsbeispiel in etwa als Zylinderstift ausgebildet und es ist zumindest an seinem einen (oberen) Ende 14 - und bei Bedarf auch an seinem unteren Ende 15 - kegelförmig sich verjüngend ausgebildet. Es weist drei erste Bereiche 16, 17 und 18 mit gleichem äußerem Durchmesser und damit gleichem Querschnitt auf, die an den Durchmesser der Bohrung 13 angepasst sind. Der Bereich 17 ist kürzer als die Bereiche 16 und 18, er ist in etwa scheibenförmig ausgebildet. Zwischen je zwei dieser ersten Bereiche 16, 17 und 17, 18 liegt jeweils ein zweiter Bereich 19 beziehungsweise 20, die einen erheblich geringeren Umfang und damit auch Querschnitt aufweisen. Der Querschnitt des Hemmelements 12 ist in den zweiten Bereichen 19 und 20 mindestens auf ein etwa Fünftel bis ein Zehntel des nicht verkleinerten Querschnitts in den ersten Bereichen 16, 17 und 18 verringert.

Die zweiten Bereiche 19 und 20 lassen sich wegen ihres geringen Querschnitts in axialer Richtung ohne weiteres etwas verbiegen oder auch zusammendrücken, wobei sich der Bereich 17 geringfügig verkannten lässt. Das Verbiegen oder Zusammendrücken erfolgt elastisch und dadurch übt das stiftförmige Hemmelement 12 nach der Montage des Drehschalters 2 einen leichten Druck gegen die raue Oberfläche 11 aus. Eine Drehbewegung des Drehschalters 2 wird dabei wie erwähnt leicht gehemmt, so dass er sich sehr präzise einstellen lässt.

Beim Drehen des Drehschalters erzeugt die Reibung des Endes 13 gegen die raue Oberfläche 11 außerdem einen leicht schnarrenden Ton, der für den Benutzer angenehm ist, da er den Einstellvorgang erkennbar werden lässt.

Die elastische Zusammendrückbarkeit des Hemmelements 12 wird somit praktisch ausschließlich durch seine konstruktive Gestaltung erreicht. Eine Materialelastizität kann allenfalls zusätzlich hinzu kommen. Das Hemmelement 12 kann aus Metall, zum Beispiel aus Aluminium, oder auch aus Kunststoff, zum Beispiel aus einem Kunstharz auf Acetyl-Basis, hergestellt werden. Bei geringerer Anforderung an die Längselastizität kann es auch genügen, das Hemmelement 12 mit nur zwei ersten Bereichen größeren Querschnitts und nur einem dazwischen liegenden zweiten Bereich geringeren Querschnitts auszubilden.

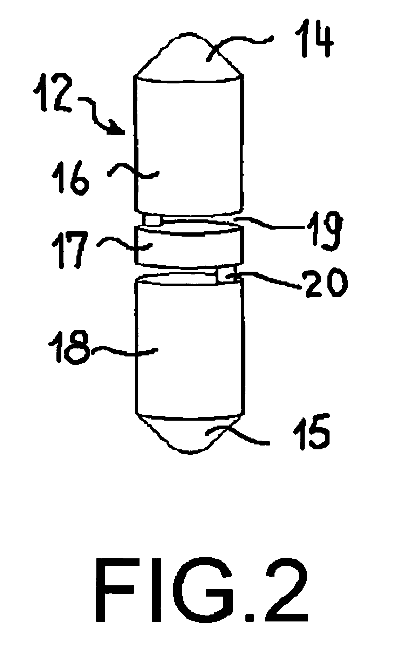

**Bezugszeichen**
1 Temperatur-Wähler
2 Drehschalter
3 Gehäuse
5 rohrförmiges Nabenteil
6 Bohrung des Gehäuses
8 Rand
9 Achse
10 ringförmiger Rand
11 raue Oberfläche
12 Hemmelement
13 Bohrung (Figur 1)
14 Ende (oberes, von 12)
15 Ende (unteres, von 12)
16, 17, 18 erste Bereiche
19, 20 zweite Bereiche (Figur 2)

## Patentansprüche

1. Wählschalter mit Hemmelement, der in einem Gehäuse (3) drehbar lagebar ist und gegen den ein, eine Drehbewegung des Wählschalters (2) hemmender Hemmelement (12) elastisch gedrückt ist, wobei das Hemmelement in dem Gehäuse (3) aufnehmbar ist, **dadurch gekennzeichnet, dass** das Hemmelement (12) zur Ausbildung eines elastischen Abschnittes mindestens drei erste Bereiche (16, 17 und 18) mit gleichem äußeren Durchmesser und damit gleichem Querschnitt aufweist, sowie zwischen diesen drei ersten Bereichen (16, 17 und 18) mindestens zwei weitere Bereiche (19 und 20), die einen erheblich geringeren Umfang und damit auch Querschnitt aufweisen, besitst.

2. Wählschalter mit Hemmelement nach Anspruch 1, **dadurch gekennzeichnet, dass** der Federabschnitt (19, 20) zumindest zwei Bereiche großen Querschnitts (16, 17) des Hemmelements verbindet.

3. Wählschalter mit Hemmelement nach Anspruch 1 oder 2, **dadurch gekennzeichnet, dass** das Hemmelement (12) drei Bereiche großen Querschnitts (16, 17, 18) aufweist.

4. Wählschalter mit Hemmelement nach Anspruch 1, 2 oder 3, **dadurch gekennzeichnet, dass** im Federabschnitt (19, 20) der Querschnitt des Hemmelements (12) mindestens auf ein etwa Fünftel des nicht verkleinerten Querschnitts verringert ist.

5. Wählschalter mit Hemmelement nach einem der vorhergehenden Ansprüche, **dadurch gekennzeichnet, dass** das Hemmelement (12) aus Kunststoff besteht, vorzugsweise aus einem einteilig hergestellten Kunststoffspritzteil.

6. Wählschalter mit Hemmelement nach einem der vorhergehenden Ansprüche, **dadurch gekennzeichnet, dass** das Hemmelement (12) aus einem Kunstharz besteht.

7. Wählschalter mit Hemmelement nach einem der vorhergehenden Ansprüche, **dadurch gekennzeichnet, dass** das Hemmelement (12) als zylindrischer Stift ausgebildet ist.

8. Wählschalter mit Hemmelement nach einem der vorhergehenden Ansprüche, **dadurch gekennzeichnet, dass** das Hemmelement ein langgestreckter Körper ist.

9. Wählschalter mit Hemmelement nach einem der vorhergehenden Ansprüche, **dadurch gekennzeichnet, dass** der Federabschnitt (19, 20) exzentrisch zu einer Längsachse des Hemmelements angeordnet ist.

10. Wählschalter mit Hemmelement nach einem der vorhergehenden Ansprüche, **dadurch gekennzeichnet, dass** zumindest zwei Federabschnitte (19, 20) in der Längsrichtung zueinander versetzt angeordnet sind.

11. Wählschalter mit Hemmelement nach einem der vorhergehenden Ansprüche, **dadurch gekennzeichnet, dass** die zumindest zwei Federabschnitte (19, 20) im wesentlichen gleich dimensioniert sind.

12. Wählschalter mit Hemmelement nach einem der vorhergehenden Ansprüche, **dadurch gekennzeichnet, dass** der Federabschnitt (19, 20) als ein Steg ausgebildet ist.

## Claims

1. Selector switch with blocking element, which switch is rotatably mounted in a housing (3) and against which a blocking element (12) blocking a rotational movement of the selector switch (2) is resiliently urged, wherein the blocking element is receivable in the housing (3), **characterised in that** the blocking element (12) has, for formation of a resilient section, at least three first regions (16, 17 and 18) with the same outer diameter and thus the same cross-section, as well as has between these three first regions (16, 17 and 18) at least two further regions (19 and 20) having a substantially smaller circumference and thus also cross-section.

2. Selector switch with blocking element according to claim 1, **characterised in that** the resilient section (19, 20) connects at least two regions of large cross-section (16, 17) of the blocking element.

3. Selector switch with blocking element according to claim 1 or 2, **characterised in that** the blocking element (12) has three regions of large cross-section (16, 17, 18).

4. Selector switch with blocking element according to claim 1, 2 or 3, **characterised in that** in the resilient section (19, 20) the cross-section of the blocking element (12) is reduced to at least approximately a fifth of the non-reduced cross-section.

5. Selector switch with blocking element according to one of the preceding claims, **characterised in that** the blocking element (12) consists of plastics material, preferably of an integrally produced plastics material injection-moulded part.

6. Selector switch with blocking element according to one of the preceding claims, **characterised in that** the blocking element (12) consists of a synthetic resin.

7. Selector switch with blocking element according to one of the preceding claims, **characterised in that** the blocking element (12) is constructed as a cylindrical pin.

8. Selector switch with blocking element according to one of the preceding claims, **characterised in that** the blocking element is an elongate body.

9. Selector switch with blocking element according to one of the preceding claims, **characterised in that** the resilient section (19, 20) is arranged eccentrically with respect to a longitudinal axis of the blocking element.

10. Selector switch with blocking element according to one of the preceding claims, **characterised in that** at least two resilient sections (19, 20) are arranged to be offset relative to one another in the longitudinal direction.

11. Selector switch with blocking element according to one of the preceding claims, **characterised in that** the at least two resilient sections (19, 20) have substantially the same dimensions.

12. Selector switch with blocking element according to one of the preceding claims, **characterised in that** the resilient section (19, 20) is constructed as a web.

## Revendications

1. Commutateur sélecteur avec élément inhibiteur, pouvant être logé de façon rotative dans un boîtier (3) et est appuyé de façon élastique contre l'élément inhibiteur (12) empêchant un mouvement de rotation du commutateur sélecteur (2), l'élément inhibiteur pouvant être réceptionné dans le boîtier (3), **caractérisé en ce que** l'élément inhibiteur (12) présente pour la réalisation d'une partie élastique au moins trois premières zones (16, 17 et 18) avec un diamètre extérieur identique et donc une section identique et comprenant entre ces trois premières zones (16, 17 et 18) au moins deux autres zones (19 et 20), qui présentent un pourtour nettement plus petit et donc également une section nettement plus petite.

2. Commutateur sélecteur avec élément inhibiteur selon la revendication 1, **caractérisé en ce que** la partie à ressort (19, 20) relie au moins deux zones de grande section (16, 17) de l'élément inhibiteur.

3. Commutateur sélecteur avec élément inhibiteur selon la revendication 1 ou 2, **caractérisé en ce que** l'élément inhibiteur (12) présente trois zones de grande section (16, 17, 18).

4. Commutateur sélecteur avec élément inhibiteur selon la revendication 1, 2 ou 3, **caractérisé en ce que**, dans la partie à ressort (19, 20), la section de l'élément inhibiteur (12) est réduite au moins à environ un cinquième de la section non réduite.

5. Commutateur sélecteur avec élément inhibiteur selon l'une quelconque des revendications précédentes, **caractérisé en ce que** l'élément inhibiteur (12) est à base de matière synthétique, de préférence une partie injectée synthétique fabriquée d'une seule pièce.

6. Commutateur sélecteur avec élément inhibiteur selon l'une quelconque des revendications précédentes, **caractérisé en ce que** l'élément inhibiteur (12) est à base d'une résine synthétique.

7. Commutateur sélecteur avec élément inhibiteur selon l'une quelconque des revendications précédentes, **caractérisé en ce que** l'élément inhibiteur (12) est conçu sous forme de goupille cylindrique.

8. Commutateur sélecteur avec élément inhibiteur selon l'une quelconque des revendications précédentes, **caractérisé en ce que** l'élément inhibiteur est un corps étiré en longueur.

9. Commutateur sélecteur avec élément inhibiteur selon l'une quelconque des revendications précédentes, **caractérisé en ce que** la partie à ressort (19, 20) est disposée de façon excentrée par rapport à l'axe longitudinal de l'élément inhibiteur.

10. Commutateur sélecteur avec élément inhibiteur selon l'une quelconque des revendications précédentes, **caractérisé en ce qu'**au moins deux parties à ressort (19, 20) sont disposées de façon décalée l'une par rapport à l'autre dans le sens de la longueur.

11. Commutateur sélecteur avec élément inhibiteur selon l'une quelconque des revendications précédentes, **caractérisé en ce que** les au moins deux parties à ressort (19, 20) sont dimensionnées de façon sensiblement identique.

12. Commutateur sélecteur avec élément inhibiteur selon l'une quelconque des revendications précédentes, **caractérisé en ce que** la partie à ressort (19, 20) est conçue sous la forme d'une entretoise.
